# EUROPÄISCHE PATENTSCHRIFT

(11) **EP 3 702 157 B1**
(45) Veröffentlichungstag und Bekanntmachung des Hinweises auf die Patenterteilung: **20.10.2021**
(21) Anmeldenummer: 20158651.8
(22) Anmeldetag: 21.02.2020
(51) Int. Cl.: B32B 38/18, B32B 41/00

(54) **VERFAHREN UND VORRICHTUNG ZUM EXAKTEN LEGEN VON BÖGEN**
METHOD AND DEVICE FOR ACCURATELY LAYING SHEETS
PROCÉDÉ ET DISPOSITIF DE PLACEMENT EXACT DE FEUILLES

(30) Priorität: 27.02.2019 DE 102019104954
(43) Veröffentlichungstag der Anmeldung: 02.09.2020
(73) Patentinhaber: Wemhöner Surface Technologies GmbH & Co. KG, 32052 Herford (DE)
(72) Erfinder: Barth, Florian, 32130 Enger (DE)
(74) Vertreter: Rolf, Gudrun

(56) Entgegenhaltungen:
- EP-B1- 2 796 293
- DE-A1- 10 146 304
- DE-A1- 10 356 427
- DE-A1-102005 009 835
- DE-A1-102005 020 456

## Beschreibung

Die Erfindung betrifft ein Verfahren und eine Vorrichtung zum exakten Legen von oberen und unteren mit Dekoren versehenen einzelblattförmigen Bögen auf ein als Transportband ausgebildetes Legeband zu einer Presse mit an die Dekore angepassten, oberflächenstrukturierten oberen und unteren Pressblechen, bei dem von einem ersten Abnahmeplatz ein unterer Bogen mit seinem Dekor nach unten auf das Legeband aufgelegt wird, auf diesen von einem zweiten Abnahmeplatz eine Trägerplatte und auf diese von dem ersten oder einem dritten Abnahmeplatz ein oberer Bogen mit seinem Dekor nach oben aufgelegt wird, wobei die Position der Bögen von auf die Dekorseite der Bögen gerichteten Kamerasystemen detektiert und ein oberer Bogen lagerichtig zum unteren Bogen auf die Trägerplatte aufgelegt wird.

Es ist ein Verfahren und eine Vorrichtung zum exakten Legen von Beschichtungsmaterial auf in einer Presse zu beschichtenden Trägerplatten bekannt, EP 2 796 293 B1, bei denen ein unterer Bogen mit dem Dekor nach unten auf ein Legeband gelegt und der Bogen darauf eine Station weit in Richtung Presse gefördert wird. Dort wird eine Trägerplatte, etwa eine Spanplatte, auf den unteren Bogen aufgelegt und das Dekor des unteren Bogens mit einem in dem Legeband integrierten Kamerasystem erkannt. Anschließend wird das Dekor eines zweiten Bogens von einem über dem Legeband befindlichen Kamerasystem erkannt und der Bogen mit Hilfe von Stellantrieben so ausgerichtet, dass das Dekor deckungsgleich zu dem Dekor des unteren Bogens auf die Trägerplatte aufgelegt wird.

Nachteilig an dem bekannten Verfahren ist, dass es ein Kamerasystem unter oder in dem Legeband oder eine Unterbrechung des Legebandes voraussetzt, wobei es sich bei solchen Legebändern in der Regel um geschlossene Gurtbänder handelt, sodass für ein Kamerasystem eine aufwendige Umlenkung der Legebänder oder sogar eine Bandteilung vorgesehen werden muss, was sehr aufwändig und unwirtschaftlich ist. Ein weiterer Nachteil besteht darin, dass verschieden lange Bögen an unterschiedlichen Stellen vermessen werden müssen, sodass das bekannte System sich nur für eine einzige Bogenlänge eignet. Ein zusätzlicher Nachteil besteht darin, dass die nach oben gerichteten Kameras naturgemäß schnell verschmutzen, sodass ein verstärkter Reinigungs- und Pflegebedarf sowie zusätzliche mechanische Schutzmechanismen der Kamerasysteme erforderlich ist, um einen ausschusslosen Betrieb des Verfahrens und der Vorrichtung gewährleisten zu können.

Es wird in DE 101 46 304 A1 ein weiteres Verfahren und eine weitere Vorrichtung zum exakten Legen von Beschichtungsmaterial auf in einer Presse zu beschichtenden Trägerplatten zur Verfügung gestellt, bei dem von einem ersten Abnahmeplatz unteres Beschichtungsmaterial auf eine Legestraße aufgelegt wird, auf dieses von einem zweiten Abnahmeplatz eine Trägerplatte und auf diese von einem dritten Abnahmeplatz oberes Beschichtungsmaterial aufgelegt wird, wobei die Ausgangsposition des oberen Beschichtungsmaterials von einem Kamerasystem A und die Position der Trägerplatte auf der Legestraße von einem Kamerasystem B detektiert wird und während der Übergabe des Beschichtungsmaterials vom Abnahmeplatz auf die Trägerplatte mittels einer Positioniervorrichtung von einem Rechner die optimale Ablageposition errechnet und das Beschichtungsmaterial optimal ausgerichtet auf der Trägerplatte abgelegt wird.

Aufgabe der Erfindung ist es, ein Verfahren und eine Vorrichtung zum exakten Legen von oberen und unteren, mit Dekoren versehenen einzelblattförmigen Bögen auf einem Transportlegeband zur Verfügung zu stellen, die eine Beschleunigung des Prozesses bei weniger erforderlicher Wartungs- und Pflegeintensität der Kamerasysteme erfordern und die für alle gängigen Produktlängen von einzelblattförmigen Bögen funktionieren.

Die Lösung dieser Aufgabe ergibt sich in Verbindung mit den Merkmalen der Oberbegriffe der Ansprüche 1 und 9 im Zusammenhang mit deren kennzeichnenden Merkmalen, bei dem Verfahren etwa dadurch, dass von einem ersten Kamerasystem für den unteren Bogen dessen Dekor oder Druckmarken und dessen oder deren Abstand zu der oder den Bogenkanten vor Erreichen des Legebandes detektiert und gespeichert wird und dass die Lage des mit seiner Dekorseite nach unten auf dem Legeband liegenden Dekor über ein zweites über dem Legeband angeordnetes Kamerasystem detektiert wird, welches auf die Rückseite des Bogens gerichtet ist und nur die Außenkanten des Bogens erfasst und aus den gespeicherten Daten des ersten Kamerasystems die Lage des Dekors errechnet, wobei der obere Bogen mit von einem Kamerasystem detektierten Position seines Dekors exakt zu dem des unteren Bogens darüber ausgerichtet werden kann.

Das Kamerasystem detektiert hier also nicht nur das Dekor bzw. die Dekor- oder Druckmarken, sondern insbesondere die Bogenkanten, deren oftmals wechselnder Abstand zum Dekor oder zu den Dekor- oder Druckmarken gespeichert wird. Ein bereits vermessener Bogen wird anschließend mit dem Dekor nach unten auf ein Förderband gelegt, woraufhin der Bogen eine Station in Richtung Presse gefördert wird. Dort, oder bereits in der vorherigen Station oder zwischendurch, wird eine Trägerplatte auf den unteren Bogen aufgelegt, wobei zuvor von oben die Außenkanten des Bogens mit einem Kamerasystem detektiert werden, sodass über die gespeicherten Daten seiner Vorderseite die Position dessen Dekors exakt bekannt ist, sodass anschließend der zweite Bogen mit dem Dekor nach oben von einem Kamerasystem detektiert und mit Hilfe von Stellantrieben so auf der Trägerplatte ausgerichtet werden kann, dass beide Dekore deckungsgleich sind, woraufhin dieser Werkstückstapel weiter in Richtung Presse gefördert werden kann, wo er nochmals passend zu den Pressblechen der Presse ausgerichtet und anschließend in die Presse eingefahren wird und beidseitig der Trägerplatte ein beidseitig vollständig synchrones Bild des Dekors zu der Oberflächengestaltung der Pressbleche, bei einer Holzmaserung wird auch von einen Doppel-Synchron-Pore gesprochen, erzielt werden kann.

Weitere vorteilhafte Ausgestaltungen des Gegenstandes der Erfindung ergeben sich aus und im Zusammenhang mit den weiteren technischen Verfahrens- und Vorrichtungsmerkmalen der nachfolgenden Unteransprüche.

Gemäß einer besonders bevorzugten Ausführungsform des erfinderischen Verfahrens detektiert das erste Kamerasystem den mit seinem Dekor noch nach oben gerichteten späteren unteren Bogen vor einer Wendestation und noch vor seiner Ablage auf dem Legeband. Dies ist besonders vorteilhaft, weil so kein von unten nach oben gerichtetes Kamerasystem benötigt wird, sodass auch keine Verschmutzung oder mechanische Beschädigung der Kameralinsen stattfinden kann.

Bei einer anderen vorteilhaften Ausführungsform der Erfindung ist das erste Kamerasystem doch noch, allerdings noch vor seiner Ablage auf dem Legeband, von unten auf den mit seinem Dekor nach unten gerichteten Bogen gerichtet, sodass zumindest das Legeband von dem Kamerasystem unabhängig ist und weder eine komplizierte und aufwendige Umlenkung des Legebandes zur Schaffung eines Raumes für das Kamerasystem erzeugt werden muss, noch muss das Legeband in zwei getrennte und voneinander beabstandete Legebänder aufgeteilt werden, was zum einen sehr unwirtschaftlich ist und zum anderen dann weitere Schutzmaßnahmen getroffen werden müssen, damit ein unterer Bogen unter einer Trägerplatte nicht der nach unten weglaufenden Oberfläche des Legebandes hinterherläuft, also mit nach unten abgelenkt wird. Auch dies ist technisch aufwendig und durch die erfindungsgemäße Lehre vollkommen überflüssig.

Vorteilhafter weise werden die Bögen von einem einzelnen Abnahmeplatz von Stapeln mit Bögen mit nach oben gerichteten Dekoren abgenommen und anschließend auf dem Weg zum Legeband oder zur Wendevorrichtung von oben bzw. deren jeweiligen Lagen des Dekors mit dem ersten Kamerasystem detektiert. Erst nach der Vermessung eines Bogens in einer Zwischenposition wird er in eine Station weit gegen die Förderrichtung versetzt, gewendet und auf das Legeband aufgelegt, wodurch es möglich wird, mit nur einem Abnahmeplatz auch kleine Stückzahlen von zu beschichteten Trägerplatten herzustellen, da von einem Abnahmeplatz abwechseln die unteren und die oberen Bögen abgezogen werden können.

Entsprechend einer anderen vorteilhaften Ausführungsform der Erfindung können die Bögen auch auf zwei benachbarten Abnahmeplätzen von Stapeln mit jeweils nach oben und unten gerichteten Dekoren abgenommen werden, sodass das erste Kamerasystem das Dekor des unteren Bogens noch vor dem Legeband von unten detektiert, wobei die Anordnung des Kamerasystems jedoch platzsparend in dieser Zwischenposition unterhalb eines Ablagetisches vorgesehen werden kann.

Denkbar und vorteilhaft ist es jedoch auch bei einer weiteren Ausführungsform der Erfindung, die Bögen von zwei benachbarten Abnahmeplätzen von Stapeln mit jeweils nach oben gerichteten Dekoren abzunehmen, wobei dann der als später mit seinem Dekor nach unten gerichteter Bogen vor seinem Wenden in einer Zwischenstation von einem ersten Kamerasystem von oben detektiert wird und erst anschließend gewendet auf das Legeband aufgelegt wird, sodass insgesamt mit dem erfinderischen Verfahren die verschiedensten Anordnungen von Abnahmeplätzen und Ausrichtungen von Bögen auf Bogenstapeln verwendet werden können.

Bevorzugterweise können auch weitere Zwischenbögen, entweder exakt ausgerichtet, oder, weil sie etwa selber kein Dekor tragen, nicht ausgerichtet zwischen dem unteren Bogen und der Trägerplatte ebenso zwischen der Trägerplatte und dem oberen Bogen angeordnet werden, wozu entsprechende Abnahmeplätze und Übergabevorrichtungen zusätzlich zu den beschriebenen neben dem Legeband vorgesehen werden müssen.

Gemäß einer bevorzugten Variante des erfinderischen Verfahrens kann auch ganz auf eine Trägerplatte verzichtet werden und der obere Bogen trägerplattenfrei und passend ausgerichtet auf den unteren Bogen aufgelegt werden.

Die Kamerasysteme detektieren dabei stets nicht nur die Lage von Druckmarken, sondern auch deren Lage im Verhältnis zu den Bogenkanten, wobei ebenfalls Bildecken und/ oder Bildkanten im Verhältnis zu den Bogenrändern aufgenommen werden können, um dadurch im auf dem Kopf gedrehten Zustand eines Bogens und der anschließenden Detektion der Bogenränder die Lage des Dekors exakt zurückrechnen zu können, was in einem angeschlossenen Prozessrechner erfolgt.

Bei der erfinderischen Vorrichtung zur Durchführung des Verfahrens nach einem der beschriebenen Ansprüche ist das Legeband zwischen endseitigen Umlenkungen eines oberen Trums mit einer geschlossenen Auflagefläche und einem unteren Leertrum ausgestattet, sodass die Transportfläche zwischen den Umlenkungen auslenkungsfrei ausgebildet ist.

Ein weiterer Vorteil der Vorrichtung zum exakten Legen von oberen und unteren mit Dekoren versehenen einzelblattförmigen Bögen auf einem Legeband besteht darin, dass die einzelnen Kameras der Kamerasysteme entlang von Längs- und Querachsen parallel zu den Kanten der Bögen verstellbar an der Vorrichtung angeordnet sind, sodass das Verfahren für alle bekannten Produktlängen von Bögen und Trägerplatten eingesetzt werden kann.

Nachfolgend wir das Verfahren und die Vorrichtung anhand von Figuren näher beschrieben. Es zeigen:
- Fig. 1: eine Aufsichtsskizze einer Vorrichtung mit einem einzelnen Abnahmeplatz,
- Fig. 2: eine Aufsichtsskizze der Vorrichtung mit zwei separaten Abnahmeplätzen, und
- Fig. 3: eine Aufsichtsskizze einer Vorrichtung mit einem einzelnen Abnahmeplatz und einer Wendeziehleiste.

Die Vorrichtung weist jeweils ein Legeband 1 auf, welches als Transportstrecke der zusammengelegten Produktstapel zu einer Presse 2 dient, wobei jeweils eine Position einer Trägerplatte 9 auf einer als Plattenzuführung dienenden Rohplattenstrecke als Abnahmeplatz 4 dafür dient und auf der gegenüberliegenden Seite des Legebandes 1 die Abnahmeplätze 3;5 zur Abnahme der einzelblattförmigen Bögen nebeneinander angeordnet sind.

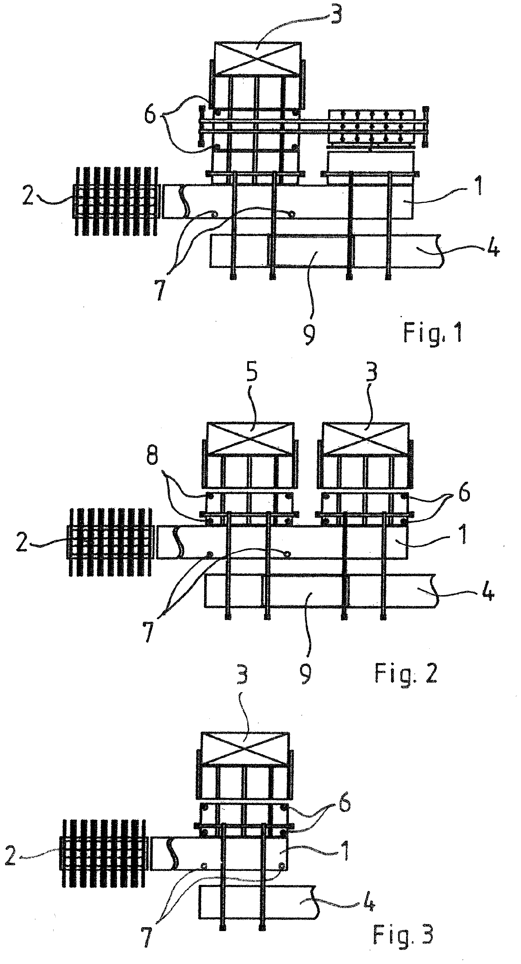

Wie in Fig. 1 dargestellt ist, kann das erfindungsgemäße Verfahren mit einer Vorrichtung mit nur einem Abnahmeplatz 3 ausgeführt werden, wobei die Bögen mit einem nach oben gerichteten Dekor vorgehalten und von dem Abnahmeplatz mit dem Bild nach oben auf eine Zwischenposition gezogen und dort von einem ersten Kamerasystem 6 vermessen werden, woraufhin ein späterer unterer Bogen dann eine Station gegen die Förderrichtung, welche in den Figuren nach links verläuft, nach rechts versetzt und gewendet und anschließend auf das Legeband 1 gezogen wird.

Anhand des zweiten Kamerasystems 7, welches gegenüber dem ersten Abnahmeplatz 3 angeordnet ist, können dann von oben die seitlichen Ränder des Bogens vermessen werden, woraufhin dann rechnerunterstützt die exakte Position des nach unten gerichteten Dekors bestimmt werden kann. Anschließend wird auf die danach zugeführte Trägerplatte 9 der obere Bogen zunächst ebenfalls in eine Zwischenposition gezogen, dort vermessen und anschließend lagerichtig auf die Trägerplatte 9 positioniert, woraufhin der gesamte Stapel vor die Presse 2 gefahren und dort, wie dies zeichnerisch nicht dargestellt ist, nochmals in Bezug auf die jeweils oberflächenstrukturierten oberen und unteren Pressbleche ausgerichtet und in die Presse 2 eingefahren wird.

Die in Fig. 2 dargestellte Vorrichtung besitzt zwei separate Abnahmeplätze 3;5, wobei mit dieser Anordnung zwei verschiedene Verfahren durchgeführt werden können.

Bei einem ersten Verfahren sind auf beiden Abnahmeplätzen die Bögen mit nach oben gerichteten Dekor angeordnet, die jeweils auf Zwischenpositionen gezogen und dort von Kamerasystemen 6;8 vermessen werden, woraufhin nur der in Transportrichtung nach links erste Bogen gewendet und auf das Legeband 4 abgelegt und bis zur Position des dritten Abnahmeplatzes 5 vor bewegt und dort wiederum über ein zweites Kamerasystem 7 von oben in Bezug auf die Lage seiner Ränder vermessen wird, um auch hier den durch das dritte Kamerasystem 8 vermessenen Bogen sehr präzise über der zwischenzeitlich aufgelegten Trägerplatte 9 zu positionieren.

Bei einer zweiten Verfahrensvariante kann das in Transportrichtung nach links erste Arbeitsmagazin des ersten Abnahmeplatzes 3 mit Bögen bestückt sein, deren Dekor nach unten gerichtet ist, wobei das erste Kamerasystem 6 unter der Zwischenposition angeordnet ist, sodass die einzelblattförmigen Bögen vor dem Überziehen auf das Legeband 1 bereits detektiert sind und dann ebenfalls wieder im zweiten Kamerasystem 7 gegenüber dem nachfolgenden Abnahmeplatz 5 für den oberen Bogen in ihrer Lage detektiert und anschließend nach Platzierung der Trägerplatte 9 auf dem Legeband 1 mit dem oberen Bogen hoch präzise ausgerichtet werden können.

Fig. 3 zeigt eine Variante des erfindungsgemäßen Verfahrens mit einer Vorrichtung mit nur einem Abnahmeplatz 3, auf dem die Bögen mit nach oben gerichteten Dekoren vorgehalten und entweder mit dem Dekor nach oben oder von einer Ziehleiste gewendet und mit dem Dekor nach unten auf eine Zwischenposition gezogen werden, wo letztere Bögen von einem ersten Kamerasystem 6, welches unterhalb der Zwischenposition nach oben gerichtet angeordnet ist, vermessen und anschließend auf das Legeband 1 gezogen und abgelegt werden, wo dann ebenfalls wieder das zweite Kamerasystem 7 deren exakte Lage anhand der Ränder von der Rückseite her detektiert und anschließend, nach Platzierung der Trägerplatte 9 oder auch ohne Trägerplatte 9 und/ oder weiterer Bögen auf dem Legeband 1, die oberen, mit den Dekoren nach oben und durch das dritte Kamerasystem 8 vermessene Bögen ebenfalls wieder auf sehr präzise darauf positioniert werden.

## Patentansprüche

1. Verfahren zum exakten Legen von oberen und unteren mit Dekoren versehenen einzelblattförmigen Bögen auf ein Legeband (1) zu einer Presse (2) mit an die Dekore angepassten oberflächenstrukturierten oberen und unteren Pressblechen, bei dem von einem ersten Abnahmeplatz (3) ein unterer Bogen mit seinem Dekor nach unten auf das Legeband (1), auf diesen von einem zweiten Abnahmeplatz (4) eine Trägerplatte (9) und auf diese von dem ersten Abnahmeplatz (3) oder einem dritten Abnahmeplatz (5) ein oberer Bogen mit seinem Dekor nach oben aufgelegt werden, wobei die Position der Bögen von auf die Dekorseite der Bögen gerichteten Kamerasystemen (6;8) detektiert wird und ein oberer Bogen lagerichtig zum unteren Bogen auf die Trägerplatte aufgelegt wird, **dadurch gekennzeichnet, dass** von einem ersten Kamerasystem (6) für den unteren Bogen dessen Dekor, Dekorränder oder Druckmarken und dessen oder deren Abstand zu der oder den Bogenkanten noch vor Erreichen des Legebandes (1) detektiert und gespeichert werden und dass die Lage des mit seiner Dekorseite nach unten auf dem Legeband (1) liegenden Dekors über ein zweites über dem Legeband (1) angeordneten Kamerasystem (7) detektiert wird, welches auf die Rückseite des Bogens gerichtet ist und nur die Außenkanten des Bogens erfasst und dass aus den gespeicherten Daten die Lage des Dekors errechnet und der oberer Bogen mit von einem Kamerasystem (6;8) detektierten Position seines Dekors exakt zu dem des unteren Bogens darüber ausgerichtet aufgelegt wird.

2. Verfahren nach Anspruch 1, **dadurch gekennzeichnet, dass** das erste Kamerasystem (6) den mit seinem Dekor nach oben gerichteten Bogen von oben vor einer Wendestation und vor seiner Ablage auf dem Legeband (1) detektiert.

3. Verfahren nach Anspruch 1, **dadurch gekennzeichnet, dass** das erste Kamerasystem (6) den mit seinem Dekor nach unten gerichteten Bogen noch vor seiner Ablage auf dem Legeband (1) von unten detektiert.

4. Verfahren nach einem der vorgenannten Ansprüche, **dadurch gekennzeichnet, dass** die Bögen von einem Abnahmeplatz (3) von Stapeln mit Bögen mit nach oben gerichteten Dekoren abgenommen werden und das erste Kamerasystem (6) die Lage jedes Dekor auf dem Bogen detektiert.

5. Verfahren nach einem der vorgenannten Ansprüche 1 bis 3, **dadurch gekennzeichnet, dass** die Bögen von zwei benachbarten Abnahmeplätzen (3;4) von Stapeln mit nach oben und unten gerichteten Dekoren abgenommen werden und das erste Kamerasystem (6) das Dekor des unteren Bogen noch vor seiner Ablage auf dem Legeband von unten detektiert.

6. Verfahren nach einem der vorgenannten Ansprüche, **dadurch gekennzeichnet, dass** mehrere Zwischenbögen mit deckungsgleich oder beliebig zwischen dem unteren Bogen und der Trägerplatte (9) und/ oder zwischen der Trägerplatte (9) und dem oberen Bogen oder trägerplattenfrei zwischen dem oberen und dem unteren Bogen angeordnet werden.

7. Verfahren nach einem der vorgenannten Ansprüche, **dadurch gekennzeichnet, dass** der obere Bogen passend ausgerichtet trägerplattenfrei unmittelbar auf dem unteren Bogen aufgelegt wird.

8. Verfahren nach einem der vorgenannten Ansprüche, **dadurch gekennzeichnet, dass** von den Kamerasystemen (6-8) die Lage von Druckmarken und/ oder Bildecken und/ oder Bildkanten des Dekors im Verhältnis zu den Bogenrändern detektiert wird.

9. Vorrichtung zur Durchführung des Verfahrens nach einem der vorgenannten Ansprüche, **dadurch gekennzeichnet, dass** das Legeband (1) zwischen endseitigen Umlenkungen ein oberes Trum mit einer geschlossenen Auflagerfläche und ein unteres Leertrum aufweist und dass die Transportfläche zwischen den Umlenkungen umlenkungsfrei ausgebildet ist.

10. Vorrichtung nach Anspruch 9, **dadurch gekennzeichnet, dass** die einzelnen Kameras der Kamerasysteme (6-8) entlang von Längs- oder Querachsen parallel zu den Kanten der Bögen verstellbar an der Vorrichtung angeordnet sind.

## Claims

1. A method for accurately laying upper and lower single-sheet-shaped sheets provided with decorations on a laying belt (1) to a press (2) with surface-structured upper and lower press plates adapted to the decorations, in which, from a first removal point (3) a lower sheet with its decoration is laid downward on the laying belt (1), on this, from a second removal point (4) a carrier plate (9) and on this, from the first removal point (3) or a third removal point (5), an upper sheet with its decoration is laid upward, wherein the position of the sheets is detected by camera systems (6; 8) directed toward the decorative side of the sheets and an upper sheet is laid in the correct position to the lower sheet on the carrier plate, **characterized in that**, for the lower sheet, its decoration, decorative edges or printing marks and its or their distance to the sheet edge or sheet edges prior to reaching the laying belt (1) are detected and stored by a first camera system (6) and that the location of the decoration lying with its decoration side downward on the laying belt (1) is detected via a second camera system (7) arranged above the laying belt (1), which is directed toward the rear side of the sheet and only detects the outer edges of the sheet and that from the stored data the location of the decoration is calculated and the upper sheet with the position of its decoration detected by a camera system (6; 8) is laid exactly aligned above to that of the lower sheet.

2. The method according to claim 1, **characterized in that** the first camera system (6) detects the sheet with its decoration directed upward from above before a turning station and prior to its placement on the laying belt (1).

3. The method according to claim 1, **characterized in that** the first camera system (6) detects the sheet with its decoration directed downward prior to its placement on the laying belt (1).

4. The method according to any of the foregoing claims, **characterized in that** the sheets are removed from a removal point (3) of stacks with sheets directed upward and the first camera system (6) detects the position of each decoration on the sheet.

5. The method according to any of the foregoing claims 1 to 3, **characterized in that** the sheets from two adjacent removal points (3, 4) are removed from stacks with decorations directed upward and downward and **in that** the first camera system (6) detects the decoration of the lower sheet from below prior to its placement on the laying belt.

6. The method according to any of the foregoing claims, **characterized in that** a plurality of intermediate sheets are arranged congruently or randomly between the lower sheet and the carrier plate (9) and/or between the carrier plate (9) and the upper sheet or without a carrier plate between the upper and the lower sheet.

7. The method according to any of the foregoing claims, **characterized in that** the upper sheet is laid properly aligned without a carrier plate directly on the lower sheet.

8. The method according to any of the foregoing claims, **characterized in that** the camera systems (6-8) detect the location of printing marks and/or image corners and/or image edges of the decoration relative to the sheet margins.

9. A device for carrying out the method according to any of the foregoing claims, **characterized in that** the laying belt (1) has an upper strand with a closed contact surface and a lower slack strand between deflections on the end and **in that** the transport surface between the deflections is embodied in a deflection free manner.

10. The device according to claim 9, **characterized in that** the individual cameras of the camera systems (6-8) are arranged adjustable along longitudinal or transverse axes parallel to the edges of the sheets on the device.

## Revendications

1. Procédé pour le placement exact de feuilles supérieure et inférieure en forme de pages individuelles pourvues de décors sur une bande de placement (1) par rapport à une presse (2) avec des tôles de presse supérieure et inférieure à surface structurée adaptées aux décors, selon lequel une feuille inférieure avec son décor vers le bas est posée à partir d'un premier emplacement de prélèvement (3) sur la bande de placement (1), une plaque de support (9) sur celle-ci à partir d'un deuxième emplacement de prélèvement (4) et une feuille supérieure avec son décor en haut sur celle-ci à partir du premier emplacement de prélèvement (3) ou d'un troisième emplacement de prélèvement (5), dans lequel la position des feuilles est détectée par des systèmes de caméra (6 ; 8) dirigés vers la face décorée des feuilles et une feuille supérieure est posée sur la plaque de support dans la bonne position par rapport à la feuille inférieure, **caractérisé en ce que** pour la feuille inférieure, le décor, les bords décorés ou marques d'impression de celle-ci et la distance de celle-ci ou de ceux-ci par rapport à ou aux arêtes de feuille sont détectés encore avant l'atteinte de la bande de placement (1) par un premier système de caméra (6) et mis en mémoire et que la position du décor situé avec sa face décorée vers le bas sur la bande de placement (1) est détectée par l'intermédiaire d'un deuxième système de caméra (7) disposé au-dessus de la bande de placement (1), lequel est dirigé vers le verso de la feuille et ne détecte que les arêtes extérieures de la feuille et que la position du décor est calculée à partir des données mises en mémoire et la feuille supérieure avec la position de son décor détectée par un système de caméra (6 ; 8) est posée de manière orientée de façon exacte par rapport à celui de la feuille inférieure sur celle-ci.

2. Procédé selon la revendication 1, **caractérisé en ce que** le premier système de caméra (6) détecte la feuille dirigée vers le haut avec son décor par le haut avant une station de retournement et avant sa pose sur la bande de placement (1).

3. Procédé selon la revendication 1, **caractérisé en ce que** le premier système de caméra (6) détecte par le bas la feuille dirigée vers le bas avec son décor encore avant sa pose sur la bande de placement (1).

4. Procédé selon l'une quelconque des revendications précédentes, **caractérisé en ce que** les feuilles sont prélevées d'un emplacement de prélèvement (3) de piles avec des feuilles avec les décors dirigés vers le haut et le premier système de caméra (6) détecte la position de chaque décor sur la feuille.

5. Procédé selon l'une quelconque des revendications précédentes 1 à 3, **caractérisé en ce que** les feuilles sont prélevées de deux emplacements de prélèvement (3 ; 4) voisins de piles avec des décors dirigés vers le haut et vers le bas et le premier système de caméra (6) détecte par le bas le décor de la feuille inférieure encore avant sa pose sur la bande de placement.

6. Procédé selon l'une quelconque des revendications précédentes, **caractérisé en ce que** plusieurs feuilles intermédiaires sont disposées de manière coïncidente ou de manière quelconque entre la feuille inférieure et la plaque de support (9) et/ou entre la plaque de support (9) et la feuille supérieure ou sans plaque de support entre la feuille supérieure et la feuille inférieure.

7. Procédé selon l'une quelconque des revendications précédentes, **caractérisé en ce que** la feuille supérieure est posée de manière orientée de façon appropriée sans plaque de support directement sur la feuille inférieure.

8. Procédé selon l'une quelconque des revendications précédentes, **caractérisé en ce que** la position de marques d'impression et/ou de coins d'image et/ou d'arêtes d'image du décor par rapport aux bords de feuille est détectée par les systèmes de caméra (6-8).

9. Dispositif pour mettre en œuvre le procédé selon l'une quelconque des revendications précédentes, **caractérisé en ce que** la bande de placement (1) présente entre des renvois côté extrémité un brin supérieur avec une surface d'appui fermée et un brin mou vide inférieur et que la surface de transport est réalisée sans renvoi entre les renvois.

10. Dispositif selon la revendication 9, **caractérisé en ce que** les caméras individuelles des systèmes de caméra (6-8) sont disposées sur le dispositif de manière à pouvoir se déplacer le long d'axes longitudinaux ou transversaux parallèlement aux arêtes des feuilles.
